# FASCICULE DE BREVET EUROPEEN

(11) **EP 2 923 882 B1**
(45) Date de publication et mention de la délivrance du brevet: **10.05.2017**
(21) Numéro de dépôt: 15158346.5
(22) Date de dépôt: 10.03.2015
(51) Int. Cl.: B60M 1/36, B60M 7/00, B60M 1/34, B60M 1/10

(54) **SYSTÈME D'ALIMENTATION PAR LE SOL POUR VÉHICULES ÉLECTRIQUES NON GUIDÉS**
STROMVERSORGUNGSSYSTEM ÜBER DEN BODEN FÜR NICHT SPURGEBUNDENE ELEKTRISCHE FAHRZEUGE
SYSTEM FOR SUPPLYING POWER VIA THE GROUND FOR FREE-WHEELED ELECTRIC VEHICLES

(30) Priorité: 25.03.2014 FR 1452527
(43) Date de publication de la demande: 30.09.2015
(73) Titulaire: ALSTOM Transport Technologies, 93400 Saint-Ouen (FR)
(72) Inventeur: Hourtane, Jean-Luc, 13320 BOUC BEL AIR (FR)
(74) Mandataire: Lavoix

(56) Documents cités:
- EP-A1- 1 582 396
- EP-A1- 2 298 588
- US-A- 4 139 071
- US-A- 5 134 254
- ALTMANN M ET AL: "SPANNUNGEN UND UEBERSPANNUNGEN IN DER RUECKLEITUNG VON GLEICHSTROMBAHNEN//VOLTAGES AND OVER VOLTAGES IN THE RETURN CIRCUIT OF DC TRACTION SYSTEMS", ELEKTRISCHE BAHNEN, OLDENBOURG INDUSTRIEVERLAG, MUNCHEN, DE, vol. 104, no. 3, 1 mars 2006 (2006-03-01), pages 129-136, XP001540553, ISSN: 0013-5437

## Description

L'invention a pour domaine celui des systèmes d'alimentation par le sol pour véhicules électriques non guidés.

Les véhicules à propulsion électrique sont vus comme une alternative aux véhicules à propulsion thermique, dans le but de réduire l'émission de gaz à effet de serre.

Un véhicule électrique comporte une source rechargeable de puissance électrique, telle qu'une batterie, et un moteur électrique, alimenté par la source et permettant de propulser le véhicule.

Pour les véhicules électriques non guidés (c'est-à-dire les camions, les camionnettes, les voitures de tourisme, etc.) il est connu de recharger la batterie du véhicule, lorsque celui-ci est à l'arrêt, en connectant la batterie à une borne de recharge, au moyen d'un câble électrique.

Il a été également proposé de recharger la batterie d'un véhicule électrique non guidé au cours de son déplacement. Pour ce faire, deux types de systèmes sont envisagés : les systèmes d'alimentation par induction et les systèmes d'alimentation par conduction.

Parmi les systèmes d'alimentation par conduction, le document WO 2010 140964 divulgue une chaussée dont la surface est munie de deux rainures parallèles entre elles et à la direction de la chaussée. A l'intérieur de chacune des rainures circule(nt) un ou plusieurs rails conducteurs d'alimentation en courant électrique. Le rebord de chaque rainure est muni d'un rail conducteur connecté électriquement à la masse.

Pour capter une puissance électrique de ce système d'alimentation par le sol, le véhicule électrique non guidé est muni d'une perche dont l'extrémité est propre à pénétrer dans les rainures de la chaussée de manière à venir en contact électrique des rails d'alimentation. Lorsque les rails d'alimentation sont respectivement portés à des potentiels adaptés, une puissance électrique est transmise à la batterie du véhicule ou éventuellement directement à son moteur électrique.

Cependant, de telles rainures sont à l'origine de problèmes de roulement.

Une roue de faible largeur risque de se coincer à l'intérieur d'une telle rainure. C'est particulièrement le cas pour une roue de vélo.

De plus, il y a une perte d'adhérence importante lorsque le pneumatique d'un véhicule passe sur la portion de la chaussée où débouche les rainures.

Enfin, les rebords de ces rainures provoquent une usure accélérée des pneumatiques.

Par ailleurs, le fait que les rainures soient ouvertes conduit à l'accumulation d'eau de pluie dans les rainures.

Ceci pose des problèmes électriques de mise en contact des rails conducteurs.

S'en suit également une corrosion accélérée des rails conducteurs. Eventuellement ceux-ci se recouvrent d'une couche de rouille qui gêne le contact avec l'extrémité de la perche de collecte de puissance électrique. Le document EP15823096 divulgue un système d'alimentation dans une chaussée comportant une paire de pistes d'alimentation qui affleurent la surface de la chaussée. L'invention a pour objet de proposer un système d'alimentation par le sol pour véhicules électriques non guidés.

L'invention a donc pour objet un système d'alimentation par le sol pour véhicules électriques non guidés, du type par conduction, caractérisé en ce qu'il comporte : - une paire de pistes d'alimentation, comportant une piste conductrice dite de phase, destinée à être connectée électriquement à une source de tension, et une piste conductrice dite de neutre, pour le retour du courant, destinée à être connectée électriquement à un potentiel de référence, la piste de neutre circulant parallèlement à la piste de phase sur un premier côté de celle-ci ; et, - une piste conductrice de protection, destinée à être connectée à un potentiel de terre, la piste de protection circulant parallèlement à la piste de phase sur un second côté de celle-ci, opposé au premier côté,
ledit système étant destiné à être implanté dans une chaussée de manière à ce que les pistes conductrices de phase, de neutre et de protection affleurent à une surface de la chaussée.

Suivant des modes particuliers de réalisation, le système comporte une ou plusieurs des caractéristiques suivantes, prise(s) isolément ou suivant toutes les combinaisons techniquement possibles : - la piste conductrice de protection est connectée électriquement à un fil destiné à être enfoui dans la chaussée, de manière à mettre ladite piste conductrice de protection au potentiel de terre. - la piste conductrice de phase est constituée d'une pluralité de segments oblongs, disposés bout à bout et isolés électriquement les uns des autres. - chaque segment est connecté électriquement à une source de puissance électrique (35) par un interrupteur commandé. - la piste conductrice de protection est constituée par une surface supérieure d'un profilé (14) scellé dans la chaussée. - la piste conductrice de neutre est constituée par une pluralité de segments oblongs, disposés bout à bout, et connectés électriquement au potentiel de référence V_{ref}.
- les pistes conductrices de phase, de neutre et de protection sont portés sur un ensemble de support, destiné à être noyé sous la surface de la chaussée.
- la piste conductrice de protection est à une distance de la piste conductrice de phase entre 5 et 50 cm, de préférence entre 10 et 30 cm, notamment égale à 15 cm.
- la largeur de la piste conductrice de protection est entre 1 et 20 cm, de préférence entre 2,5 et 15 cm, notamment égale à 4 cm.
- la piste conductrice de protection est au niveau de la surface de la chaussée.
- la piste conductrice de phase et de neutre est entre 0 et 5mm au-dessus du niveau de la surface de la chaussée, notamment 2mm au-dessus de la surface de la chaussée.
- le système est destiné à alimenter un véhicule électrique non guidé équipé d'un moyen de captation du courant propre, au cours du déplacement du véhicule sur la chaussée, à être mis en contact glissant sur les deux pistes conductrices de phase et de neutre, simultanément.

L'invention sera mieux comprise à la lecture de la description qui va suivre d'un mode de réalisation particulier, donné uniquement à titre illustratif et non limitatif, et faite en se référant aux dessins annexés sur lesquels :
- la figure 1 est une vue de dos représentant schématiquement un véhicule électrique non guidé circulant sur une chaussée équipée du système d'alimentation par le sol selon l'invention ;
- la figure 2 est une vue de dessus de la figure 1 ;
- la figure 3 est une section du système d'alimentation par le sol des figures 1 et 2, prêt à être implanté dans la chaussée ; et,
- la figure 4 est une représentation schématique du fonctionnement électrique du système d'alimentation par le sol selon l'invention.

Fort de son expérience dans le domaine des systèmes d'alimentation par le sol, du type par conduction, pour des véhicules électriques guidés, c'est-à-dire contraints à se déplacer le long de voies, (en particulier de tramways se déplaçant le long de voies ferrées), la demanderesse à développer le présent système d'alimentation par le sol pour des véhicules électriques non guidés.

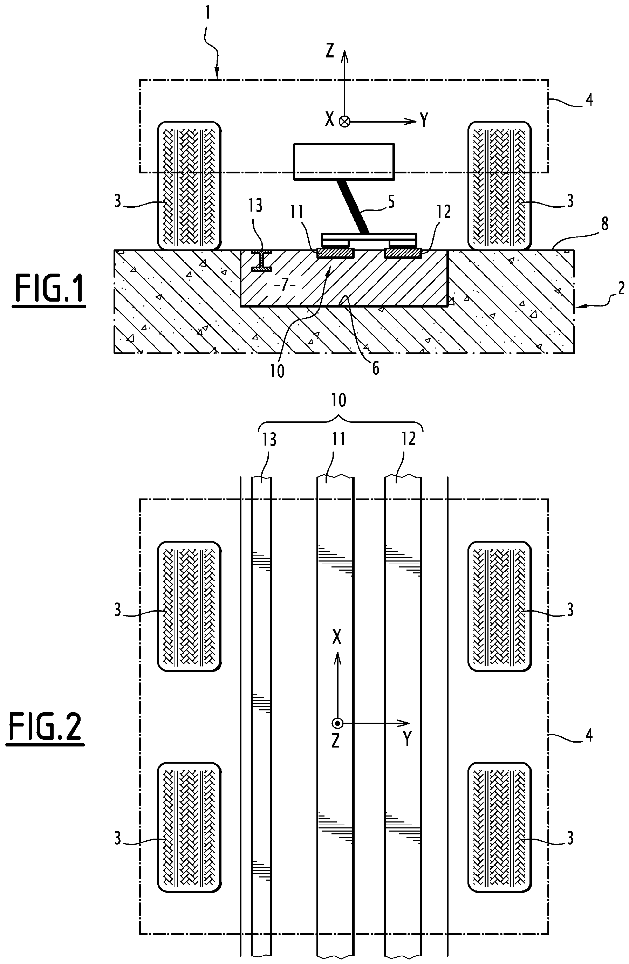

Sur les figures 1 et 2, est représentée une voiture 1, en tant que véhicule électrique non guidé, circulant sur une chaussée 2.

Un trièdre XYZ est classiquement associé à la voiture 1 : l'axe X selon la direction longitudinale, orienté vers l'avant ; l'axe Y selon la direction transversale, orienté de gauche à droite ; et l'axe Z selon la direction verticale, orienté de bas en haut.

La voiture 1 comporte une caisse 4 et des roues 3, dont certaines directrices. La voiture 1 comporte des moyens de direction (non représentés) permettant à un conducteur de modifier l'angle des roues directrices dans le plan XY de manière à diriger le véhicule 1.

La voiture 1 comporte une batterie rechargeable et un moteur électrique (non représentés).

La voiture 1 est équipée d'un moyen de captation permettant de collecter une puissance électrique au cours du déplacement de la voiture 1. Les moyens de captation sont référencés de manière générale par le chiffre 5.

Le moyen de captation 5 comporte un patin propre à être mis en contact glissant sur une paire de pistes d'alimentation du système d'alimentation par le sol, qui va maintenant être décrit.

La chaussée 2 comporte une tranchée 6 à l'intérieur de laquelle est positionné le système d'alimentation par le sol, référencé de manière générale par le chiffre 10.

Une fois le système 10 mis en position dans la tranchée 6, celle-ci est remplie de béton 7 de manière à ce que la surface supérieure 8 de la chaussée 2 soit continue sur toute la largeur de celle-ci. La surface supérieure 8 est sensiblement plane.

En position, le système 10 présente, affleurant à la surface 8 de la chaussée 2 :
- une piste conductrice de phase 11, destinée à être connectée électriquement à une source de puissance électrique, délivrant par exemple un potentiel Vₛ de +750 V DC ;
- une piste conductrice de neutre 12, destinée à être connectée électriquement à un potentiel de référence V_{ref}, par exemple de 0 V ;
- une piste conductrice de protection 13, destinée à être connectée électriquement à un potentiel de terre (Vₜₑᵣᵣₑ).

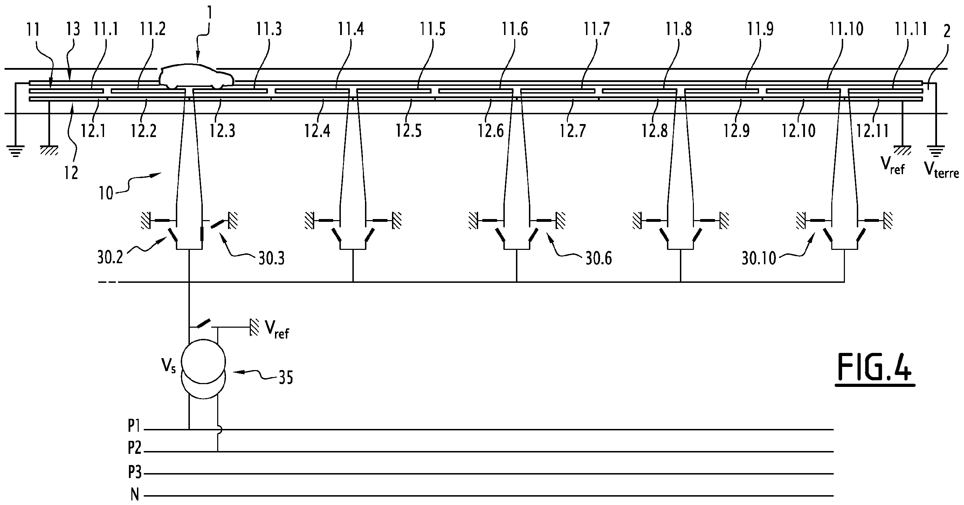

La piste de phase 11 est constituée d'une pluralité de segments (11.i sur la figure 4) qui, dans le mode de réalisation actuellement envisagé, présentent chacun une largeur de 10 cm et une longueur de 20 m.

Les segments sont disposés bout à bout pour constituer la piste de phase 11.

Les segments sont isolés électriquement les uns des autres.

Avantageusement, la piste de neutre 12 est réalisée en utilisant des segments identiques à ceux utilisés pour la piste de phase 11. Ainsi, la piste 12 est constituée d'une pluralité de segments (12.i sur la figure 4) présentant une largeur d'environ 10 cm et une longueur d'environ 20 m. Il n'est cependant pas nécessaire que les segments de la piste de neutre soient isolés électriquement les uns aux autres.

La piste de neutre 12 circule parallèlement à la piste de phase 11, sur un premier côté de celle-ci. Le bord latéral de la piste de phase 11 et le bord latéral de la piste de neutre 12, qui sont en regard l'un de l'autre, sont espacés d'une première distance de 15 cm environ.

La piste de protection 13 est constituée par la face supérieure d'un profilé 14 scellé dans le béton 7 remplissant la tranchée 6.

Dans le mode de réalisation actuellement préféré, le profilé 14 présente une section en forme de « I », dont l'âme centrale est disposée sensiblement verticalement.

La fonction de la piste de protection 13 est de constituer un moyen de collecte des électrons d'un courant de fuite provenant de la piste conductrice de phase 11.

Pour ce faire, la piste de protection 13 est disposée parallèlement à la piste de phase 11, sur un second côté de celle-ci. Ce second côté est opposé au premier côté de la piste de phase 11 comportant la piste de neutre 12.

Les fuites de courant vers le premier côté sont collectées par la piste de neutre 12. Pour collecter les fuites de courant vers le second côté, la piste de protection 13 est placée sur le second côté de la piste de phase 11.

Le bord latéral de la piste de phase 11 et le bord latéral de la piste de protection 13, qui sont en regard l'un de l'autre, sont espacés d'une seconde distance de 15 cm environ.

Dans le mode de réalisation envisagé, la largeur de la piste de protection 13 est d'environ 4 cm.

Avec ce choix particulier de valeurs pour les dimensions transversales des différentes pistes et de leur espacement mutuel, le système d'alimentation par le sol 10 présente une largeur totale d'environ 54 cm. Cette largeur totale est choisie pour rester inférieure à l'entraxe du plus petit véhicule électrique non-guidé susceptible de circuler sur la chaussée 2 et d'utiliser le système 10.

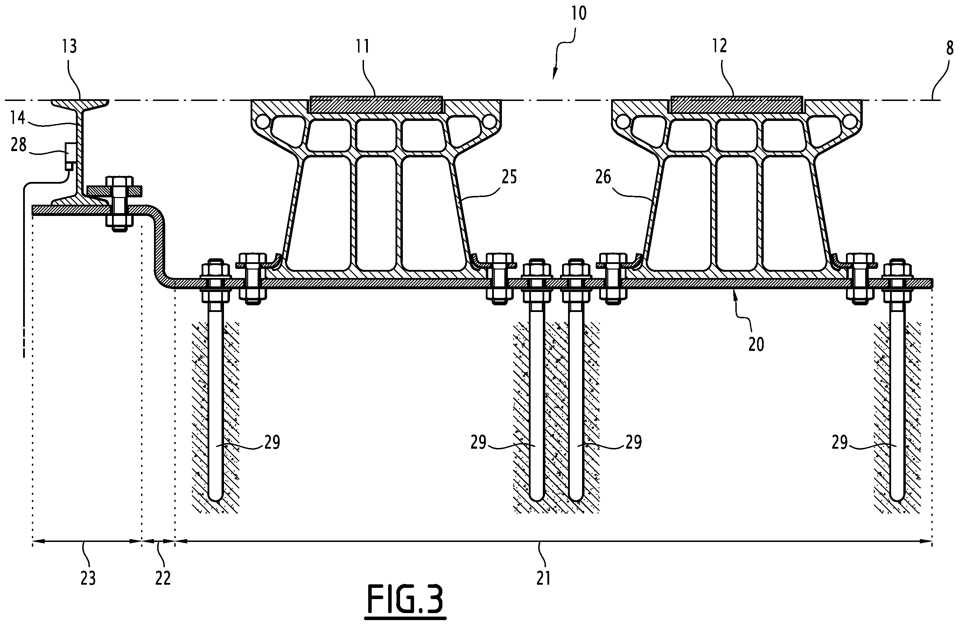

Comme cela est représenté sur la figure 3, pour faciliter la mise en place du système 10, celui-ci comporte un ensemble de support des différentes pistes.

L'ensemble de support comporte une embase 20 ayant une portion principale 21, sensiblement plane, une portion intermédiaire 22, en forme de « S », et une portion latérale 23 sensiblement plane.

La portion principale 21 porte deux profilés de support 25 et 26, identiques entre eux, et destinés à servir de support isolant respectivement à la piste conductrice de phase 11 et à la piste conductrice de neutre 12. Les pistes sont fixées mécaniquement sur les profilés de supports, mais sont isolées électriquement de ces derniers.

Les profilés de support 25 et 26 sont connectés mécaniquement et électriquement à l'embase 20.

La portion latérale 23 de l'embase 20 porte le profilé 14.

Un dénivelé entre les portions principale 21 et latérale 23 est réglé au moyen de la portion intermédiaire 22 pour que la surface supérieure du profilé 14, définissant la piste de protection 13, soit au même niveau que les surfaces supérieures des pistes de phase 11 et de neutre 12. Ce niveau est destiné à être situé légèrement au-dessus de la surface 8 de la chaussée 2.

Un câble électrique 28, fixé à l'âme du profilé 14, est destiné à être enfoui dans la chaussée 2, avantageusement au-delà de la tranchée 6, de manière à mettre la piste de protection 13 au potentiel de terre Vₜₑᵣᵣₑ, et par continuité électrique l'ensemble de support.

L'embase 20 est munie d'une pluralité de tirant 29, réglables en hauteur, propres à être fichés dans le fond de la tranchée 6 de manière à prépositionner le système d'alimentation par le sol 10 de sorte que le niveau des pistes soient affleurant à la surface 8 de la chaussée 2 à réaliser.

Puis, du béton est coulé de manière à noyer l'ensemble de support. Les profilés de supports 25 et 26 ainsi que le profilé 14 sont alors scellés dans la couche de béton 7. Avantageusement, l'état de la surface supérieure de la couche de béton est travaillé pour présenter une adhérence adaptée aux pneumatiques des véhicules circulant sur la chaussée 2.

La paire de pistes d'alimentation, constituée de la piste de phase 11 et de la piste de neutre 12, ainsi que la piste de protection 13 sont affleurantes à la surface 8 de la chaussée 2. Plus précisément, alors que la piste de protection 13 est sensiblement au niveau de la surface de la chaussée, les pistes de neutre et de phase font légèrement saillie au-dessus de la surface 8 de la chaussée 2, par exemple d'une hauteur de l'ordre de quelques millimètres, notamment égale à 2 mm.

Ainsi, lorsque la piste de phase 11 est portée à un potentiel élevée, toute fuite de courant, due par exemple à la présence d'une flaque ou d'un film d'eau sur la surface 8 de la chaussée, est collectée sur le premier côté par la piste de neutre 12 et sur le second côté par la piste de protection 13. Cela empêche que la portion de la surface de la chaussée portée à un potentiel élevé ne s'étende latéralement au-delà de la largeur du système d'alimentation par le sol 10. En choisissant la largeur totale du système d'alimentation par le sol 10 inférieure à l'entraxe du plus petit véhicule autorisé à circuler sur la chaussée et propre à utiliser le système 10, on garantit que si un piéton se trouve latéralement sur le premier ou le second côté d'un segment de la piste de phase 11, mais au-delà soit de la piste de neutre soit de la piste de protection, le piéton ne sera pas électrocuté lorsque ce segment est porté à un potentiel élevé.

En se référant maintenant à la figure 4, chaque segment 11.i de la piste de phase 11 est connecté électriquement, via un interrupteur commandé 30, à une source 35 de puissance électrique. La source 35 est propre par exemple à délivrer une tension Vₛ de 750 V DC. La source 35 est en fait une station relais propre à convertir un courant triphasé en un courant biphasé.

Les interrupteurs commandés 30.i des segments 11.i de la piste de phase 11 sont actionnés pour basculer en synchronisation avec le déplacement de la voiture 1 le long de la chaussée 2, de manière à ce que le segment au-dessus duquel se situe la voiture 1 et éventuellement les segments adjacents soit connectés à la source 35 pour être portés au potentiel de 750 V.

Le moyen de collecte 5 de la voiture 1 frottant simultanément sur les pistes de 11 phase et de neutre 12, permet la circulation d'un courant d'alimentation vers la batterie rechargeable de la voiture 1 ou son moteur électrique.

Les segments 11.i sont alimentés successivement, de sorte qu'un segment ou éventuellement deux segments sont au potentiel de 750 V à un instant donné. Ainsi, la portion de la surface de la chaussée portée à un potentiel, dangereux pour un piéton, ne s'étend pas longitudinalement au-delà de la longueur d'un segment ou de deux segments au maximum. C'est la raison pour laquelle, la longueur des segments est choisie pour correspondre sensiblement à la distance de freinage d'une voiture de tourisme roulant à 60 km/h.

## Revendications

1. Système d'alimentation par le sol (10) pour véhicules électriques non guidés (1), du type par conduction, comportant :
- une paire de pistes d'alimentation, comportant une piste conductrice dite de phase (11), destinée à être connectée électriquement à une source de tension (Vₛ), et une piste conductrice dite de neutre (12), pour le retour du courant, destinée à être connectée électriquement à un potentiel de référence (V_{ref}), la piste de neutre circulant parallèlement à la piste de phase sur un premier côté de celle-ci, les pistes étant implantées dans une chaussée de manière que ces pistes affleurent à une surface (18) de la chaussée ;
**caractérisé en ce qu'**il comporte une piste conductrice de protection (13), destinée à être connectée à un potentiel de terre (Vₜₑᵣᵣₑ), la piste de protection circulant parallèlement à la piste de phase (11) sur un second côté de celle-ci, opposé au premier côté, et étant aussi implantée dans la chaussée de manière à ce que cette piste conductrice de protection affleure à la surface (18) de la chaussée (2).

2. Système selon la revendication 1, **caractérisé en ce que** la piste conductrice de protection (13) est connectée électriquement à un fil destiné à être enfoui dans la chaussée (2), de manière à mettre ladite piste conductrice de protection au potentiel de terre.

3. Système selon l'une quelconque des revendications 1 et 2, **caractérisé en ce que** la piste conductrice de phase (11) est constituée d'une pluralité de segments (11.i) oblongs, disposés bout à bout et isolés électriquement les uns des autres.

4. Système selon la revendication 3, **caractérisé en ce que** chaque segment (11.i) est connecté électriquement à une source de puissance électrique (35) par un interrupteur commandé (30.i).

5. Système selon l'une quelconque des revendications 1 à 4, **caractérisé en ce que** la piste conductrice de protection (13) est constituée par une surface supérieure d'un profilé (14) scellé dans la chaussée (2).

6. Système selon l'une quelconque des revendications 1 à 5, **caractérisé en ce que** la piste conductrice de neutre (12) est constituée par une pluralité de segments (12.i) oblongs, disposés bout à bout, et connectés électriquement au potentiel de référence (V_{ref}).

7. Système selon l'une quelconque des revendications 1 à 6, **caractérisé en ce que** les pistes conductrices de phase (11), de neutre (12) et de protection (13) sont portés sur un ensemble de support, destiné à être noyé sous la surface (8) de la chaussée (2).

8. Système selon l'une quelconque des revendication 1 à 7, **caractérisé en ce que** la piste conductrice de protection (13) est à une distance de la piste conductrice de phase (11) entre 5 et 50 cm, de préférence entre 10 et 30 cm, notamment égale à 15 cm.

9. Système selon l'une quelconque des revendications 1 à 8, **caractérisé en ce que** la largeur de la piste conductrice de protection (13) est entre 1 et 20 cm, de préférence entre 2,5 et 15 cm, notamment égale à 4 cm.

10. Système selon l'une quelconque des revendications 1 à 9, **caractérisé en ce que** la piste conductrice de protection (13) est au niveau de la surface (8) de la chaussée (2).

11. Système selon l'une quelconque des revendications 1 à 10, **caractérisé en ce que** la piste conductrice de phase (11) et de neutre (12) est entre 0 et 5mm au-dessus du niveau de la surface (8) de la chaussée (2), notamment 2mm au-dessus de la surface de la chaussée.

12. Système selon l'une quelconque des revendications 1 à 11, **caractérisé en ce qu'**il est destiné à alimenter un véhicule électrique non guidé (1) équipé d'un moyen de captation (5) du courant propre, au cours du déplacement du véhicule sur la chaussée (2), à être mis en contact glissant sur les deux pistes conductrices de phase (11) et de neutre (12), simultanément.

## Patentansprüche

1. System zur Energieversorgung durch den Boden (10) für nicht-geführte Elektrofahrzeuge (1) des Typs durch Leitung, aufweisend:
- ein Paar Versorgungsbahnen, aufweisend eine leitende Bahn, die als Phasebahn (11) bezeichnet wird, die vorgesehen ist, um elektrisch mit einer Spannungsquelle (Vₛ) verbunden zu sein, und eine leitende Bahn, die als Neutralbahn (12) bezeichnet wird, für die Rückleitung des Stroms, die vorgesehen ist, um elektrisch mit einem Bezugspotential (V_{ref}) verbunden zu sein, wobei die Neutralbahn parallel zu der Phasebahn auf einer ersten Seite derselben verläuft, wobei die Bahnen derart in eine Fahrbahn eingesetzt sind, dass diese Bahnen mit einer Oberfläche (18) der Fahrbahn bündig sind,
**dadurch gekennzeichnet, dass** es aufweist:
- eine leitende Schutzbahn (13), die vorgesehen ist, um mit einem Massepotential (V_{Masse}) verbunden zu sein, wobei die Schutzbahn parallel zu der Phasebahn (11) auf einer zweiten Seite derselben entgegengesetzt zu der ersten Seite verläuft und ebenfalls derart in die Fahrbahn eingesetzt ist, dass diese leitende Schutzbahn mit der Oberfläche (18) der Fahrbahn (2) bündig ist.

2. System gemäß Anspruch 1, **dadurch gekennzeichnet, dass** die leitende Schutzbahn (13) elektrisch mit einer Leitung verbunden ist, die vorgesehen ist, um in die Fahrbahn (2) eingegraben zu sein, so dass die leitende Schutzbahn auf das Massepotential gesetzt ist.

3. System gemäß irgendeinem der Ansprüche 1 und 2,
**dadurch gekennzeichnet, dass** die leitende Phasebahn (11) aus einer Mehrzahl von länglichen Segmenten (11.i) gebildet ist, die nebeneinander angeordnet und elektrisch voneinander isoliert sind.

4. System gemäß Anspruch 3, **dadurch gekennzeichnet, dass** jedes Segment (11.i) durch einen gesteuerten Schalter (30.i) elektrisch mit einer elektrischen Leistungsquelle (35) verbunden ist.

5. System gemäß irgendeinem der Ansprüche 1 bis 4,
**dadurch gekennzeichnet, dass** die leitende Schutzbahn (13) durch eine obere Fläche eines Profils (14) gebildet ist, das in der Fahrbahn (2) versiegelt ist.

6. System gemäß irgendeinem der Ansprüche 1 bis 5,
**dadurch gekennzeichnet, dass** die leitende Neutralbahn (12) durch eine Mehrzahl von Segmenten (12.i) gebildet ist, die nebeneinander angeordnet sind und elektrisch mit dem Referenzpotential (V_{ref}) verbunden sind.

7. System gemäß irgendeinem der Ansprüche 1 bis 6,
**dadurch gekennzeichnet, dass** die leitende Phasebahn (11), die leitende Neutralbahn (12) und die leitende Schutzbahn (13) auf einem Trägersatz gehalten sind, der vorgesehen ist, um unter die Oberfläche (8) der Fahrbahn (2) eingelassen zu sein.

8. System gemäß irgendeinem der Ansprüche 1 bis 7,
**dadurch gekennzeichnet, dass** sich die leitende Schutzbahn (13) in einem Abstand von zwischen 5 und 50 cm, vorzugsweise zwischen 10 und 30 cm, insbesondere gleich 15 cm von der leitenden Phasebahn (11) befindet.

9. System gemäß irgendeinem der Ansprüche 1 bis 8,
**dadurch gekennzeichnet, dass** die Breite der leitenden Schutzbahn (13) zwischen 1 und 20 cm, vorzugsweise zwischen 2,5 und 15 cm, insbesondere gleich 4 cm beträgt.

10. System gemäß irgendeinem der Ansprüche 1 bis 9,
**dadurch gekennzeichnet, dass** die leitende Schutzbahn (13) auf Höhe der Oberfläche (8) der Fahrbahn (2) liegt.

11. System gemäß irgendeinem der Ansprüche 1 bis 10,
**dadurch gekennzeichnet, dass** sich die leitende Phasebahn (11) und die leitende Neutralbahn (12) zwischen 0 und 5 mm über der Höhe der Oberfläche (8) der Fahrbahn (2), insbesondere 2 mm über der Oberfläche der Fahrbahn befinden.

12. System gemäß irgendeinem der Ansprüche 1 bis 11,
**dadurch gekennzeichnet, dass** es vorgesehen ist, um ein nichtgeführtes Elektrofahrzeug (1) mit Strom zu versorgen, das mit einem eigenen Stromabnehmermittel (5) ausgestattet ist, während des Fahrens des Fahrzeugs auf der Fahrbahn (2), um gleichzeitig auf den beiden Leiterbahnen, nämlich der leitenden Phasebahn (11) und der leitenden Neutralbahn (12) gleitend in Kontakt gebracht zu werden.

## Claims

1. A ground level power supply system (10) for non-guided electric vehicles (1), of the conduction type, comprising:
- a pair of power supply tracks, comprising a so-called live conductive track (11), designed to be electrically connected to a voltage source (Vs), and a so-called neutral conductive track (12), for the return of the current, designed to be electrically connected to a reference potential (V_{ref}), the neutral track being parallel to the live track on a first side thereof, the tracks being installed in a roadway such that these tracks are flush with a surface (18) of the roadway,
**characterised in that** is comprises a protective conductive track (13), designed to be connected to a ground potential (Vₜₑᵣᵣₑ), the protective track being parallel to the live track (11) on a second side thereof, opposite the first side, also installed in the roadway such that the protective conductive tracks is flush with the surface (18) of the roadway (2).

2. System according to claim 1, **characterised in that** the protective conductive track (13) is electrically connected to a wire designed to be buried in the roadway (2), so as to place said protective conductive track at the ground potential.

3. System according to any one of claims 1 and 2, **characterised in that** the live conductive track (11) is made up of a plurality of elongated segments (11.i), arranged end to end and electrically isolated from one another.

4. System according to claim 3, **characterised in that** each segment (11.i) is electrically connected to an electric power source (35) by a controlled switch (30.i).

5. System according to any one of claims 1 and 4, **characterised in that** the protective conductive track (13) is made up of an upper surface of a profile (14) sealed in the roadway (2).

6. System according to any one of claims 1 and 5, **characterised in that** the neutral conductive track (12) is made up of a plurality of elongated segments (12.i), positioned end to end, and electrically connected to the reference potential (V_{ref}).

7. System according to any one of claims 1 and 6, **characterised in that** the live (11), neutral (12) and protective (13) conductive tracks are supported on a support assembly, designed to be embedded below the surface (8) of the roadway (2).

8. System according to any one of claims 1 and 7, **characterised in that** the protective conductive track (13) is at a distance from the live conductive track (11) between 5 and 50 cm, preferably between 10 and 30 cm, in particular equal to 15 cm.

9. System according to any one of claims 1 and 8, **characterised in that** the width of the protective conductive track (13) is between 1 and 20 cm, preferably between 2.5 and 15 cm, in particular equal to 4 cm.

10. System according to any one of claims 1 and 9, **characterised in that** the protective conductive track (8) is at the surface of the roadway (2).

11. System according to any one of claims 1 and 10, **characterised in that** the live (11) and neutral (12) conductive tracks are between 0 and 5 mm above the surface (8) level of the roadway (2), in particular 2 mm above the surface of the roadway.

12. System according to any one of claims 1 and 11, **characterised in that** it is designed to power a non-guided electric vehicle (1) equipped with means for capturing the current (5) able, during the movement of the vehicle on the roadway (2), to be placed in sliding contact on the two live (11) and neutral (12) conductive tracks, simultaneously.
